(19) Europäisches Patentamt
European Patent Office
Office européen des brevets

(11) **EP 1 903 329 B1**

(12) **EUROPEAN PATENT SPECIFICATION**

(45) Date of publication and mention
of the grant of the patent:
**22.12.2010 Bulletin 2010/51**

(51) Int Cl.:
**G01N 21/55** *(2006.01)*    **G01N 21/35** *(2006.01)*

(21) Application number: **06291479.1**

(22) Date of filing: **20.09.2006**

(54) **An apparatus and method for optically determining the presence of carbon dioxide**

Vorrichtung und Verfahren zur optischen Ermittlung der Anwesenheit von Kohlendioxid

Dispositif et procédé pour la détection optique de la présence de dioxyde de carbone

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**26.03.2008 Bulletin 2008/13**

(73) Proprietors:
• **Services Pétroliers Schlumberger**
**75007 Paris (FR)**
Designated Contracting States:
**FR**
• **Schlumberger Technology B.V.**
**2514 JG The Hague (NL)**
Designated Contracting States:
**BG CZ DE DK GR HU IE IT LT PL RO SI SK TR**
• **Schlumberger Holdings Limited**
**Road Town, Tortola (VG)**
Designated Contracting States:
**GB NL**
• **PRAD Research and Development N.V.**
**Willemstad, Curacao (AN)**
Designated Contracting States:
**AT BE CH CY EE ES FI IS LI LU LV MC PT SE**

(72) Inventors:
• **Tavernier, Emmanuel**
**75012 (FR)**
• **Donzier, Eric**
**28260 Bercheres sur Vesgre (FR)**
• **Rezgui, Fadhel**
**92320 Chatillon (FR)**
• **Salamitou, Philippe**
**75016 Paris (FR)**

(74) Representative: **Raybaud, Hélène F. A.**
**Etudes & Productions Schlumberger**
**Intellectual Property Law Department**
**1 Rue Henri Becquerel**
**B.P. 202**
**92142 Clamart Cedex (FR)**

(56) References cited:
WO-A-00/42416    WO-A-02/84334
WO-A-91/18548    WO-A1-03/087788
GB-A- 2 402 476    US-A- 5 051 551
US-A- 5 185 640

## Description

### Field of the invention

The apparatus and method according to the invention relates to the optical determination of the presence of carbon dioxide within a fluid. More precisely, the apparatus and method according to the invention relates to the determination of carbon dioxide partial pressure within the gas phase of the wellbore effluents.

### Description of the prior art

Carbon dioxide is naturally present in gas wells as well as in gas phase of oil wells effluents. Its concentration varies between 0 and 100%. For economic reasons, it is important to be able of determining this concentration in order to assess the commercial value of a reservoir. In case the $CO_2$ concentration is high, the value of the reservoir will significantly decrease. Furthermore a high $CO_2$ concentration will have strong impact on maintenance of the well equipments - especially the ones intervening in the completion part of the well - due to high corrosives properties of this gas.

It is already known to use absorption spectroscopy within ultra-violet bands, visible and infrared bands when analyzing wellbore effluents quantitatively as well as qualitatively.

The OFA, Optical Fluid Analyser system, in the Schlumberger commercially available MDT, Modular Formation Dynamics Tester, tool has provided since its introduction in 1993 a qualitative measure of fluid samples collected in the wellbore via the MDT tool. The OFA analyser system subjects formation fluids to illumination within the visible and near infrared domains. Within these specific wavelengths, it is not possible to evaluate the $CO_2$ concentration because other wellbore components absorb light within the same wavelength.

It is known in the art to use differential spectroscopy within the infrared, around $4.3\mu m$ for measuring the $CO_2$ concentration, especially within environmental surveillance applications. Within this wavelength, carbon dioxide presents an important and characteristic absorption band. This absorption band does not interfere with the absorption bands of other wellbore components.

The typical wavelength at which the infrared signal can penetrate in the sample before being completely attenuated depends on $CO_2$ density and concentration. Regarding the usual conditions within hydrocarbon wells (pressure up to 20000Psi, temperature up to 200°C or more, $CO_2$ concentration from 2% to 50%), it requires an optical path length of the order of microns to measure carbon dioxide via differential absorption at $4.3\mu m$. This optical path length is too small for using the OFA system as described above wherein the optical path length is of the order of millimeters.

The "Attenuated Total Reflexion" (ATR) principle is well known as being well adapted for spectroscopy within absorbing materials. This technique allows spectroscopy measurements using optical path lengths of the order of micron. Within the ATR principle, an incident beam is emitted towards a window behind which is the fluid to analyze. The incidence angle is such that a total reflexion occurs. An evanescent wave is then transmitted in the medium to analyze and is absorbed within the absorption wavelengths of said medium. This absorption is detectable on the spectrum of the reflected wave.

The known ATR optical sensors comprise flat windows. This specificity generates a significant problem when desiring to use said sensors within the context of wellbore fluids. Actually, due to the effluent different phases (oil, water and gas), the sensor flat window is rapidly polluted, which significantly impacts the measurement accuracy.

WO 00/42416 describes a formation fluid analysis tool having a sampling probe that is inserted into the formation for extracting formation fluid and a sample chamber wherein said fluid is measured. The chamber contains an internal reflectance crystal in contact with formation fluid. An acousto-optical tunable filter (AOTF) transmits a single wavelength of light from a broadband light source. This monochromatic light is carried by an optic fiber to the internal reflectance crystal where it undergoes total reflection at the crystal faces in contact with the formation fluid. The reflected light carries information about this absorption, which is determined by the chemical composition of the fluid. A return fiber conveys the reflected light back to a spectrometer, and a processor determines the absorption at the wavelength of the monochromatic light.

### Summary of the invention

It is thus an object of the invention to overcome the various problems and limitations given within the techniques known from the prior art in order to offer reliable and accurate method and apparatus for measuring presence of carbon dioxide within well effluents. The method and apparatus of the invention will then be useable in a huge number of applications among - and non restrictively- within samples taken from the formation, within the effluent flow during production (production logging operation) or in surface testing facilities.

According to the invention, it is proposed an apparatus to optically determine the presence of carbon dioxide within a hydrocarbon wellbore fluid in conformity with appended claim 1.

This apparatus advantageously allows detection of CO2 presence within abrasive and multiphase fluids since the optical principle (ATR) put in place is particularly efficient for CO2 detection and usage of a sensing probe with a tip allows a surface capillary drainage. This drainage ensures that the sensing probe remains clean even when immersed within well effluents, which allows reliable optical measurements.

In an advantageous embodiment, the tip of the optical sensing probe comprises a conical shape having an angle partial to its axis such that a total reflection of the light emitted from the light emitting source occurs.

Advantageously, the angle of the conical tip of the sensing probe is approximately 90°and the optical sensing probe is made out of sapphire.

Advantageously, the optical transmitting means comprise a first wave guide conveying the light from the light emitting source to an optical coupler; the optical coupler conveying the light emitted to and reflected from the optical sensing probe; and a second wave guide conveying the light reflected by the optical sensing probe to the means to discriminate between wavelengths of light beams. In a preferred embodiment, the wave guides are made out of sapphire rods.

In an advantageous embodiment, the optical coupler is a multimode coupler comprising extremities of the first and second wave guides, said extremities being beveled and glued together.

It is also an object of the present invention to propose a method to optically determine the presence of carbon dioxide within a hydrocarbon wellbore fluid in conformity with appended claim 9.

Advantageously, the presence of carbon dioxide is given by the partial carbon dioxide pressure according to the relation:

$$P_{rel} CO2 = invf (F3/F4)$$

where in F3 is the intensity of light band corresponding to the carbon dioxide absorption wavelength and F4 is the intensity of light bands corresponding to non-carbon dioxide absorption wavelengths.

### Brief description of the drawings.

Various embodiments of the invention are described below by way of example with reference to the accompanying drawings, in which :

- figure 1 schematically represents an apparatus according to the invention;
- figure 2 schematically represents light wave guides arrangements according to one embodiment of the invention
- figure 3 schematically represents means to represents and convert reflected bands of light according to an embodiment of the invention;
- figure 4 schematically represents a second embodiment of light wave guides arrangement according to the invention.
- Figure 5 schematically represents an example of a sensing probe according to the invention;

### Description of the preferred embodiments.

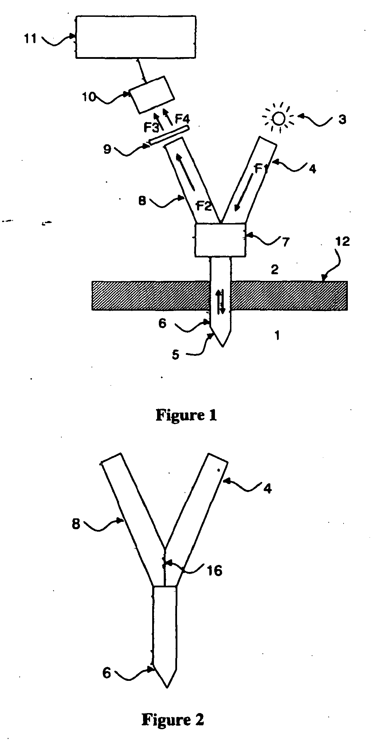

Figure 1 represents schematically an apparatus according to the invention. An optical sensor probe 6 is in contact with a medium 1 to analyze. A sealed pressure barrier 12 isolates the sensor probe 6 from the rest of the optical apparatus 2. Therefore, other sensitive optical and electronic pars of the apparatus are not exposed to same rough conditions that the sensing probe faces. The pressure barrier 12 can be made out of various ways among which are: brazing of the sensing probe 6 within a metallic barrier 12 or gluing said probe into the barrier 12 or even the two of these previous methods.

An infrared light 3 source transmits an infrared light beam F1 within a first wave guide 4. As a matter of example, the infrared light source can be a blackbody source: an incandescent filament light with bulb transparent to infrared light or an infrared light.

The light beam F1 is conducted towards the sensing probe 6 by a coupler 7. In a preferred example, the coupler is a multimode one and, as represented on figure 2, comprises extremities of the waves guides 4 and 8 that have been beveled and glued together at an interface 16.

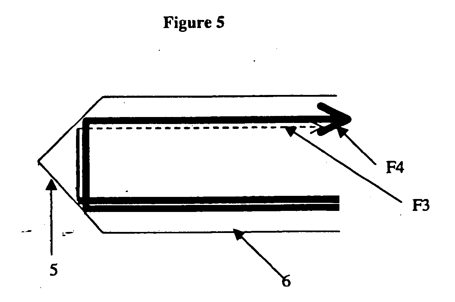

The sensing probe comprises a tip 5 which is designed such that the emitted infrared light beam is reflected according to a total reflexion. Advantageously, as schematically represented on figure 5, the sensing probe 6 is made out of sapphire and the tip 5 is cone shaped with an angle relative to axis of the cone of approximately 45° (cone shape with angle of 90°).

The reflected light beam then travels back from the tip 5 to the sensor probe 6. The coupler 7 then guides a light beam F2, which is a part of the reflected light beam, towards a second wave guide 8. Advantageously, the first and second wave guides 4 and 8 are made out of sapphire rods with a diameter of approximately 1.5mm.

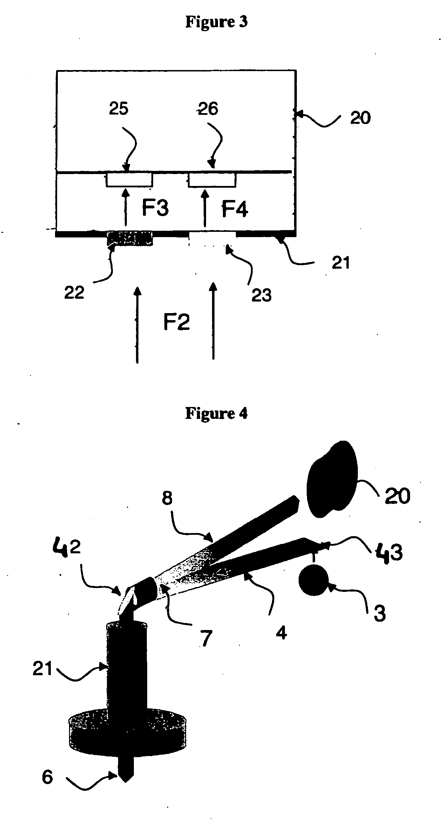

Discriminating means 9 then decomposes the infrared light beam F2 in various wavelengths. Part of these wavelengths F3 is in the carbon dioxide absorption band whether second part F4 of these wavelengths is out of the CO2 absorption band. As represented on figure 3, the discriminating means 9 may comprise two filters 22 and 23 placed side by side on a baffle 21. These filters respectively separate F3 light beam from the F4 light beam in the light beam F2.

Once isolated F3 light beam from F4 light beam, converting means 10 convert F3 and F4 into electrical signals. As represented on figure 3, two pyroelectric detectors 25 and 26 may constitute the converting means 10. The detectors 25 and 26 are placed side by side in front of filters 22 and 23 respectively. In this way, detector 25 is only exposed to light beam F3 whereas detector 26 in only exposed to light beam F4. The detectors 25 and 26 as well as the filters 22 and 23 can be placed in the same housing 20.

These electrical signals are turned into digital signals and interpreted by a controller 11.

The ratio between the intensity of light beams F3 and F4 is a function f of the carbon dioxide concentration in the medium 1 to analyze. The partial carbon dioxide pressure, $P_{par}$ CO2, is given by the inverse of said function f:

$$P_{par} \, CO2 = invf \, (F3/F4).$$

The apparatus and method according to the invention can be implemented in any tool wherein the tip 5 of the sensing probe 6 can being contact with the fluid to analyze.

As an example, the apparatus according to the invention can be placed within the flowline of the commercially available MDT, Modular Formation Dynamics Tester, tool. In this embodiment, the whole apparatus is located in the tool body such that the tip of the sensing probe is in contact with the formation sample taken by the MDT while the other part of the apparatus are sealed from the sample fluids.

As represented on figure 4, it is possible to collapse optical paths 4 and 8 so that the apparatus according to the invention is made smaller and robust. To this end, the extremity 42, opposed to the tip 5 of the sensing probe 6, and the extremity 43, closed to the infrared light 3, of the wave guide 4 are beveled with a 45° angle so that the optical path can be bent to 90°. In this example, the infrared light 3 source inject into the wave guide 4 an infrared light beam via the beveled end 43. The wave guides 4 and 8 are perpendicular to the axis of the sensing probe 6 and optically linked together via the beveled extremity 42 of said probe.

**Claims**

1.  Apparatus to optically determine the presence of carbon dioxide within a gas phase of a hydrocarbon wellbore fluid, said apparatus comprising:

    - a light emitting source (3);
    - an optical sensing probe (6) in contact with the fluid to analyze, the optical sensing probe (6) comprising a tip (5) working as attenuated total reflection (ATR) absorber within infrared wavelengths;
    - discriminating means (9) to discriminate between wavelengths of light beams reflected by the optical sensing probe (6);
    - optical light transmitting means (4,8) in order to convey the light emitted from the light emitting source (3) to the optical sensing probe (6) and the light reflected by the optical sensing probe (6) to discriminating means (9);
    - converting means (10) to convert wavelengths discriminated light beams into electrical signals; and
    - a controller (11) to interpret the electrical signals into measurement data indicating presence of carbon dioxide within the fluid;

    **characterized in that**:

    - the discriminating means (9) are arranged to discriminate between wavelengths of light beams reflected by the optical sensing probe (6) such that the band of light (F3) corresponding to the carbon dioxide absorption wavelength is isolated from other bands (F4) out of the carbon dioxide absorption band; and
    - the controller (11) is arranged to determine a ratio between intensity of light (F3) band corresponding to the carbon dioxide absorption wavelength and intensity of light (F4) bands corresponding to non-carbon dioxide wavelengths.

2. Apparatus according to claim 1, wherein the tip of the optical sensing probe (6) comprises a conical shape having an angle partial to its axis such that a total reflection of the light emitted from the light emitting source occurs.

3. Apparatus according to claim 2, wherein the angle of the conical tip (5) of the sensing probe (6) is approximately 90°.

4. Apparatus according to any of claims 1 to 3, wherein the optical sensing probe (6) is made out of sapphire.

5. Apparatus according to any one of claims 1 to 4, wherein the light emitting source (3) is a blackbody source emitting an infrared light.

6. Apparatus according to any preceding claims, wherein the optical transmitting means comprise:

   - a first wave guide (4) conveying the light from the light emitting source (3) to an optical coupler (7);
   - the optical coupler (7) conveying the light emitted to and reflected from the optical sensing probe (6); and
   - a second wave guide (8) conveying the light reflected by the optical sensing probe (6) to the descriminating means (9).

7. Apparatus according to claim 6, wherein the wave guides (4, 8) are made out of sapphire rods.

8. Apparatus according to claim 6 or 7 wherein the optical coupler is a multimode coupler (7) comprising extremities of the first (4) and second (8) wave guides, said extremities being beveled and glued together.

9. A method to optically determine the presence of carbon dioxide within a gas phase of a hydrocarbon wellbore fluid, said method comprises:

   - injecting an incident light beam into an optical sensing probe (6) in contact with the fluid (1) to analyze, the incident light beam being an infrared light beam, and the optical sensor probe (6) being designed such that an attenuated total reflexion (ATR) of the incident light beam occurs at the probe tip (5);
   - sending the light beam reflected by the optical sensor probe (6) to discriminating means (9);
   - discriminating between wavelengths of the reflected light beams; and
   - converting wavelengths discriminated light beams into measurement data indicating presence of carbon dioxide within the fluid;

   **characterized in that**:

   - the discriminating step comprises discriminating between wavelengths of light beams reflected by the optical sensing probe (6) such that the band of light (F3) corresponding to the carbon dioxide absorption wavelength is isolated from other bands (F4) out of the carbon dioxide absorption band; and
   - the converting step is based on determining a ratio between intensity of light (F3) band corresponding to the carbon dioxide absorption wavelength and intensity of light (F4) bands corresponding to non-carbon dioxide wavelengths.

10. A method according to claim 9, wherein the presence of the carbon dioxide is given by the partial carbon dioxide pressure according to the relation:

$$P_{par} CO2 = invf (F3/F4)$$

wherein F3 is the intensity of light band corresponding to the carbon dioxide absorption wavelength, F4 is the intensity of light bands corresponding to non-carbon dioxide absorption wavelengths, and invf is an inverse of a function giving a carbon dioxide concentration in the fluid (1) to analyze.


**Patentansprüche**

1. Vorrichtung zum optischen Bestimmen des Vorhandenseins von Kohlenstoffdioxid in einer Gasphase eines Kohlenstoffwasserstoff-Bohrlochfluids, wobei die Vorrichtung umfasst:

   - eine Lichtemissionsquelle (3);

- eine optische Erfassungssonde (6), die mit dem zu analysierenden Fluid in Kontakt ist, wobei die optische Erfassungssonde (6) eine Spitze (5) aufweist, die als Absorber mit gedämpfter Totalreflexion (ATR-Absorber) im Infrarotwellenlängenbereich arbeitet;

- Diskriminierungsmittel (9), um zwischen Wellenlängen von Lichtstrahlenbündeln, die von der optischen Erfassungssonde (6) reflektiert werden, zu diskriminieren;

- optische Lichtsendemittel (4, 8), um das von der Lichtemissionsquelle (3) emittierte Licht zu der optischen Erfassungssonde (6) zu transportieren und um das von der optischen Erfassungssonde (6) reflektierte Licht zu den Diskriminierungsmitteln (9) zu transportieren;

- Umsetzungsmittel (10), um nach Wellenlängen diskriminierte Lichtstrahlenbündel in elektrische Signale umzusetzen; und

- eine Steuereinheit (11), um die elektrischen Signale als Messdaten zu interpretieren, die das Vorhandensein von Kohlenstoffdioxid in dem Fluid angeben;

**dadurch gekennzeichnet, dass**:

- die Diskriminierungsmittel (9) dazu ausgelegt sind, zwischen Wellenlängen von Lichtstrahlenbündeln, die von der optischen Erfassungssonde (6) reflektiert werden, zu diskriminieren, so dass das Lichtband (F3), das der Kohlenstoffdioxid-Absorptionswellenlänge entspricht, von anderen Bändern (F4) aus dem Kohlenstoffdioxid-Absorptionsband isoliert wird; und

- die Steuereinheit (11) dazu ausgelegt ist, ein Verhältnis zwischen der Intensität des Lichtbandes (F3), das der Kohlenstoffdioxid-Absorptionswellenlänge entspricht, und der Intensität von Lichtbändern (F4), die anderen als Kohlenstoffdioxidwellenlängen entsprechen, zu bestimmen.

2. Vorrichtung nach Anspruch 1, wobei die Spitze der optischen Erfassungssonde (6) eine konische Form aufweist, die einen Winkelanteil in Bezug auf ihre Achse hat, derart, dass eine Totalreflexion des von der Lichtemissionsquelle emittierten Lichts auftritt.

3. Vorrichtung nach Anspruch 2, wobei der Winkel der konischen Spitze (5) der Erfassungssonde (6) etwa 90° ist.

4. Vorrichtung nach einem der Ansprüche 1 bis 3', wobei die optische Erfassungssonde (6) aus Saphir hergestellt ist.

5. Vorrichtung nach einem der Ansprüche 1 bis 4, wobei die Lichtemissionsquelle (3) eine Schwarzkörperquelle ist, die Infrarotlicht emittiert.

6. Vorrichtung nach einem vorhergehenden Anspruch, wobei die optischen Übertragungsmittel umfassen:

- einen ersten Wellenleiter (4), der das Licht von der Lichtemissionsquelle (3) zu einem optischen Koppler (7) transportiert;

- den optischen Koppler (7), der das Licht transportiert, das zu der optischen Erfassungssonde (6) emittiert und hiervon reflektiert wird; und

- einen zweiten Wellenleiter (8), der das von der optischen Erfassungssonde (6) reflektierte Licht zu den Diskriminierungsmitteln (9) transportiert.

7. Vorrichtung nach Anspruch 6, wobei die Wellenleiter (4, 8) aus Saphirstäben hergestellt sind.

8. Vorrichtung nach Anspruch 6 oder 7, wobei der optische Koppler ein Mehrfachmoden-Koppler (7) ist, der Enden des ersten Wellenleiters (4) und des zweiten Wellenleiters (8) umfasst, wobei die Enden angefast und miteinander verklebt sind.

9. Verfahren zum optischen Bestimmen des Vorhandenseins von Kohlenstoffdioxid in einer Gasphase eines Kohlenstoffwasserstoff-Bohrlochfluids, wobei das Verfahren umfasst:

- Schicken eines auftreffenden Lichtstrahlenbündels in eine optische Erfassungssonde (6), die mit dem zu analysierenden Fluid (1) in Kontakt ist, wobei das auftreffende Lichtstrahlenbündel ein Infrarotlichtstrahlenbündel ist und wobei die optische Sensorsonde (6) so entworfen ist, dass an der Sondenspitze (5) eine gedämpfte Totalreflexion (ATR) des auftreffenden Lichtstrahlenbündels erfolgt;

- Senden des von der optischen Sensorsonde (6) reflektierten Lichtstrahlenbündels zu Diskriminierungsmitteln (9) ;

- Diskriminieren zwischen Wellenlängen der reflektierten Lichtstrahlenbündel; und
- Umsetzen von nach Wellenlängen diskriminierten Lichtstrahlenbündeln in Messdaten, die das Vorhandensein von Kohlenstoffdioxid in dem Fluid angeben;

**dadurch gekennzeichnet, dass**:

- der Diskriminierungsschritt das Diskriminieren zwischen Wellenlängen von Lichtstrahlenbündeln, die von der optischen Erfassungssonde (6) reflektiert werden, umfasst, so dass das Lichtband (F3), das der Kohlenstoffdioxid-Absorptionswellenlänge entspricht, von anderen Bändern (F4) aus dem Kohlenstoffdioxid-Absorptionsband isoliert wird; und
- der Umsetzungsschritt auf der Bestimmung eines Verhältnisses zwischen der Intensität des Lichtbandes (F3), das der Kunststoffdioxid-Absorptionswellenlänge entspricht, und der Intensität von Lichtbändern (F4), die anderen als Kohlenstoffdioxid-Wellenlängen entsprechen, beruht.

**10.** Verfahren nach Anspruch 9, wobei das Vorhandensein von Kohlenstoffdioxid durch den Kohlenstoffdioxid-Partialdruck gemäß der folgenden Beziehung gegeben ist:

$$P_{par} CO2 = invf(F3/F4)$$

wobei F3 die Intensität des Lichtbandes ist, das der Kohlenstoffdioxid-Absorptionslänge entspricht, F4 die Intensität von Lichtbändern ist, die anderen als Kohlenstoffdioxid-Absorptionswellenlängen entsprechen, und invf ein Kehrwert einer Funktion ist, die eine Kohlenstoffdioxidkonzentration in dem zu analysierenden Fluid (1) angibt.

**Revendications**

**1.** Dispositif de détermination optique de présence de dioxyde de carbone dans une phase gazeuse de fluide de sondage de puits d'hydrocarbure, ledit dispositif comprenant :

une source d'émission de lumière (3) ;
une sonde de détection optique (6) en contact avec le fluide pour l'analyser, la sonde de détection optique (6) comprenant une pointe (5) opérant comme absorbeur de réflexion totale atténuée (ATR) dans les longueurs d'ondes infrarouges ;
des moyens de discrimination (9) pour différentier les longueurs d'ondes des faisceaux de lumière réfléchis par la sonde de détection optique (6) ;
des moyens de transmission optique (4, 8) destinés à acheminer la lumière émise par la source émettrice de lumière (3) vers la sonde de détection optique (6) et la lumière réfléchie par la sonde de détection optique (6) vers les moyens de discrimination (9) ;
des moyens de conversion (10) destinés à convertir les faisceaux de lumière discriminés en longueurs d'ondes en signaux électriques ; et
un contrôleur (11) destiné à interpréter les signaux électriques en données de mesure indiquant la présence de dioxyde de carbone dans le fluide ;
**caractérisé en ce que** :

les moyens de discrimination (9) sont arrangés pour différentier les longueurs d'ondes des faisceaux de lumière réfléchis par la sonde de détection optique (6) de telle manière que la bande de lumière (F3) correspondant à la longueur d'onde d'absorption du dioxyde de carbone soit isolée d'autres bandes (F4) situées hors de la bande d'absorption du dioxyde de carbone ; et
le contrôleur (11) est arrangé pour déterminer un rapport entre l'intensité de la bande de lumière (F3) correspondant à la longueur d'onde d'absorption du dioxyde de carbone et l'intensité de bandes de lumière (F4) correspondant à des longueurs d'ondes de ce qui n'est pas du dioxyde de carbone.

**2.** Dispositif selon la revendication 1, dans lequel la pointe de la sonde de détection optique (6) comprend une forme conique ayant un angle par rapport à son axe tel qu'il se produit une réflexion totale de la lumière émise par la source d'émission de lumière.

**3.** Dispositif selon la revendication 2, dans lequel l'angle de la pointe conique (5) de la sonde de détection (6) est approximativement de 90°.

**4.** Dispositif selon l'une quelconque des revendications 1 à 3, dans lequel la sonde de détection optique (6) est faite de saphir.

**5.** Dispositif selon l'une quelconque des revendications 1 à 4, dans lequel la source d'émission de lumière (3) est une source de corps noir émettant une lumière infrarouge.

**6.** Dispositif selon l'une quelconque des revendications précédentes, dans lequel les moyens de transmission optique comprennent :

un premier guide d'ondes (4) acheminant la lumière depuis la source d'émission de lumière (3) vers un coupleur optique (7) ;
le coupleur optique (7) acheminant la lumière émise vers, et réfléchie par, la sonde de détection optique (6) ; et
un second guide d'ondes (8) acheminant la lumière réfléchie par la sonde de détection optique (6) vers les moyens de discrimination (9).

**7.** Dispositif selon la revendication 6, dans lequel les guides d'ondes (4, 8) sont constitués de barreaux de saphir.

**8.** Dispositif selon la revendication 6 ou la revendication 7, dans lequel le coupleur optique est un coupleur multimode (7) comprenant des extrémités des premier (4) et second (8) guides d'ondes, lesdites extrémités étant biseautées et collées l'une à l'autre.

**9.** Procédé de détermination optique de présence de dioxyde de carbone dans une phase gazeuse de fluide de sondage de puits d'hydrocarbure, ledit procédé comprenant :

l'injection d'un faisceau de lumière incident dans une sonde de détection optique (6) en contact avec le fluide (1) à analyser, le faisceau de lumière incident étant un faisceau de lumière infrarouge, et la sonde de détection optique (6) étant conçue de manière à se qu'il se produise une réflexion totale atténuée (ATR) du faisceau de lumière incident au niveau de la pointe du capteur (5) ;
l'envoi du faisceau de lumière réfléchi par la sonde de détection optique. (6) vers des moyens de discrimination (9) ;
la différenciation des longueurs d'ondes des faisceaux de lumière réfléchis ; et
la conversion des faisceaux de lumière discriminés en longueurs d'ondes en données de mesure indiquant la présence de dioxyde de carbone dans le fluide ;
**caractérisé en ce que** :

l'étape de différenciation comprend la différenciation des longueurs d'ondes de faisceaux de lumière réfléchis par la sonde de détection optique (6) de telle manière que la bande de lumière (F3) correspondant à la longueur d'onde d'absorption du dioxyde de carbone soit isolée d'autres bandes (F4) situées hors de la bande d'absorption du dioxyde de carbone ; et
l'étape de conversion est basée sur la détermination d'un rapport entre l'intensité de la bande de lumière (F3) correspondant à la longueur d'onde d'absorption du dioxyde de carbone et l'intensité de bandes de lumière (F4) correspondant à des longueurs de ce qui n'est pas du dioxyde de carbone.

**10.** Procédé selon la revendication 9, dans lequel la présence du dioxyde de carbone est donnée par la pression partielle de dioxyde de carbone selon la relation :

$$P_{par}\ CO2 = invf(F3/F4)$$

où F3 est l'intensité de la bande de lumière correspondant à la longueur d'onde d'absorption du dioxyde de carbone, F4 est l'intensité de bandes de lumière correspondant à des longueurs d'ondes d'absorption de ce qui n'est pas du dioxyde de carbone, et invf est l'inverse d'une fonction donnant la concentration de dioxyde de carbone dans le fluide (1) à analyser.

**Figure 1**

**Figure 2**

**Figure 3**

**Figure 4**

**Figure 5**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0042416 A